# FASCICULE DE BREVET EUROPEEN

(11) **EP 0 743 173 B1**
(45) Date de publication et mention de la délivrance du brevet: **28.03.2001**
(21) Numéro de dépôt: 96401081.3
(22) Date de dépôt: 17.05.1996
(51) Int. Cl.: B32B 3/26, B32B 3/12, E04C 2/32, E04C 2/36, B60R 5/04

(54) **Panneau substantiellement rigide en un matériau composite recyclable et procédé pour son élaboration**
Im wesentlichen starre Platte aus einem rezyklierbaren Verbundwerkstoff und Verfahren zur Herstellung
Substantially rigid panel of recyclable composite material and its process of production

(30) Priorité: 17.05.1995 FR 9505841
(43) Date de publication de la demande: 20.11.1996
(73) Titulaire: SILAC AUTO, 16600 Mornac (FR)
(72) Inventeur: Baudonnel, Jacques, 16110 La Rochefoucault (FR); de Boissieu, Bernard, 16110 La Rochefoucault (FR)
(74) Mandataire: Le Roux, Martine

(56) Documents cités:
- EP-A- 0 306 364
- CH-A- 240 949
- DE-A- 4 440 246
- FR-A- 2 482 255
- GB-A- 2 101 930
- US-A- 4 177 312
- US-A- 4 769 109
- US-A- 4 778 709

## Description

La présente invention a pour objet des panneaux substantiellement rigides en un matériau composite recyclable, des produits finis incorporant dans leur structure de tels panneaux et un procédé d'élaboration desdits panneaux.

Les panneaux de l'invention -caractérisés par leur structure spécifique et la nature des matériaux les constituant- conviennent tout particulièrement pour élaborer des pièces d'habillage d'habitacle et de coffre de véhicules automobiles. Ils ont été développés dans ce contexte mais à la lecture de ce qui suit, et notamment à la considération de leurs propriétés et performances, on comprendra que leur utilisation n'est nullement limitée audit contexte.

La Demanderesse a plus particulièrement été confrontée au problème de l'élaboration de panneaux devant répondre à un cahier des charges précis, en termes de rigidité, de résistance mécanique, de résistance à la chaleur, de recyclabilité et plus précisément à celui de l'élaboration de tablettes arrières autoporteuses pour véhicules automobiles.

A ce jour, les pièces d'habitacle ou de coffre pour véhicules automobiles sont des structures composites à base de fibres synthétiques (généralement conditionnées sous la forme de nontissés) liées à l'aide d'un liant choisi parmi les résines thermodurcissables (telles les résines époxy ou phénoliques), les latex synthétiques réticulables (tels les latex butadiène, styrène), les liants thermoplastiques (tels les éthylène-acétate de vinyl (EVA), les chlorures de vinyl (PVC), les acryliques). Pour l'élaboration de pièces relativement solides et rigides, on préconise l'intervention de résines thermodurcissables et on doit généralement inclure dans la structure desdites pièces des armatures métalliques. Ainsi réalise-t-on des tablettes arrières autoporteuses par thermoformage, autour d'une armature métallique en forme de H, d'un composite dit pré-imprégné. Ledit composite pré-imprégné est un nontissé de fibres synthétiques qui a été imprégné d'une résine thermodurcissable. A l'issue dudit thermoformage, ladite armature métallique est noyée dans la structure composite. De telles tablettes peuvent répondre au cahier des charges en termes de rigidité, de résistance mécanique, de résistance à la chaleur mais il se pose le problème de leur recyclabilité. On doit gérer, d'une part, la récupération de l'armature métallique et d'autre part, l'élimination du composite : nontissé imprégné de résine thermodurcissable. Or, l'homme du métier n'ignore pas, les difficultés à éliminer, en termes de déchets, les thermodurs.

La Demanderesse propose présentement une nouvelle technologie pour résoudre ce problème technique. Elle propose plus précisément de nouveaux panneaux qui ne sont pas obtenus par thermoformage d'un composite pré-imprégné thermodur mais qui sont obtenus à partir de composites originaux (eux-mêmes avantageusement obtenus à partir de matériaux dits pré-imprégnés sec ou 100 % fibreux) thermoformés et dont le recyclage ne soulève pas de difficulté.

De façon tout à fait originale, les panneaux de l'invention, substantiellement rigides, n'incluent dans leur structure, ni armature, métallique ou autre, ni (nontissé imprégné d'un) liant, résine thermodurcissable ou autre.

On a décrit, dans de nombreux documents de l'art antérieur, notamment dans US-A-4 177 312, CH-A-240 949, EP-A-306 364 et FR-A-2 482 255, des produits qui peuvent, en première analyse, seulement, être assimilés aux panneaux de l'invention. Lesdits produits, s'ils présentent parfois les caractéristiques de structure (de géométrie) desdits panneaux de l'invention, ne combinent jamais lesdites caractéristiques de structure avec celles de matériau desdits panneaux de l'invention. Lesdits produits de l'art antérieur ne sont pas à base de matériaux composites au sens de l'invention.

Les panneaux de l'invention présentent une structure, exempte d'armature, qui comporte deux parois de faible épaisseur en un (des) matériau(x) composite(s) recyclable(s), lesdites deux parois étant solidarisées l'une à l'autre et présentant entre elles des vides; chacune desdites parois présentant un module d'Young compris entre 500 et 4000 MPa et le(s)dit(s) matériau(x) composite(s) comportant une matrice thermoplastique renforcée par des fibres cellulosiques.

On précise ci-après chacune des caractéristiques desdits panneaux, caractéristiques de structure et de matériau.

Les panneaux de l'invention ne sont pas des pièces monoblocs, leur structure est "bi-composante". Ladite structure comporte deux parois solidarisées l'une à l'autre en de multiples points ou portions de surfaces de sorte qu'entre lesdites deux parois sont ménagés des vides de volume(s) relatif(s). La multiplicité des points ou portions de surfaces de contact (contact direct ou indirect, selon les différentes variantes de réalisation) entre lesdites deux parois contribue à la rigidité de l'ensemble.

On précise ci-après que l'épaisseur de chacune des parois est généralement comprise entre 1 et 10 mm. Avantageusement, elle est de l'ordre de 2 mm. En fait, ladite épaisseur doit être suffisante pour garantir un minimum de rigidité (au vu de la nature du matériau constituant ladite paroi) mais ne doit généralement pas être excessive pour des questions d'encombrement et de poids. Les deux parois peuvent en tout état de cause présenter des épaisseurs différentes.

De la même façon, la hauteur des vides ménagés entre lesdites deux parois peut varier selon les différents modes de réalisation de l'invention. Ladite hauteur est généralement comprise entre 8 et 16,5 mm. Avantageusement, elle est de l'ordre de 12,5 mm. En fait, en augmentant ladite hauteur, on gagne en rigidité. Il peut alors se poser le problème de l'encombrement.

On comprendra que les panneaux de l'invention peuvent exister selon diverses variantes de réalisation. L'homme du métier pourra jouer sur leurs dimensions, leur géométrie (ceci sera explicité plus avant dans le présent texte) pour optimiser leurs performances.

Au niveau structurel, on insistera sur le fait que lesdits panneaux ne comportent pas d'armature ou renfort et sont bi-composants. On peut qualifier les deux parois intervenant dans leur structure de peaux ou de demi-coques.

La nature du matériau constituant lesdites deux parois constitue par ailleurs l'autre caractéristique principale des panneaux de l'invention. Ledit matériau intervenant est un matériau composite (homogène dans son épaisseur) recyclable, exempt de liant et notamment de résine thermodurcissable. Ledit matériau composite comporte, de façon caractéristique, une matrice thermoplastique (en polyéthylène, polypropylène, polyester, polyamide, par exemple) renforcée par des fibres cellulosiques. Un tel matériau est choisi pour sa recyclabilité et pour ses performances mécaniques. Il intervient notamment pour l'obtention du résultat escompté au niveau de la rigidité du panneau. Les parois dudit panneau, en ledit matériau, présentent un module d'Young E, exprimé en MPa (1 MPa = 1 N/mm²) compris entre 500 et 4000. Ce paramètre est évidemment lié à la densité dudit matériau.

Selon la variante de réalisation préférée de l'invention, ledit matériau composite recyclable à matrice thermoplastique renforcée par des fibres cellulosiques est obtenu (généralement par thermoformage) à partir d'un matériau 100 % fibreux (on parle aussi de pré-imprégné sec en référence à l'art antérieur présenté ci-dessus selon lequel interviennent des composites pré-imprégnés d'un liant). Un tel matériau est per se connu. On en préconise avantageusement l'utilisation dans le cadre de la présente invention.

Les fibres constituant ledit matériau (dit pré-imprégné sec) sont avantageusement agencées sous la forme d'étoffés : nontissés, tissus ou tricots. On réserve généralement l'utilisation d'étoffes tissées ou tricotées à des applications ponctuelles ; la mise en oeuvre de nontissés étant moins onéreuse (et préférée, dans le cadre de l'invention).

Le matériau est un matériau composite dans la mesure où il associe, pour sa cohérence, des fibres de renfort cellulosiques et des fibres destinées à constituer une matrice thermoplastique (ces dernières fibres étant les précurseurs de ladite matrice). Ces deux types de fibres ont des comportements thermiques distincts.

A titre de fibres de renfort, interviennent des fibres cellulosiques telles des fibres de lin, jute, chanvre. De telles fibres ont généralement un titre compris entre 10 et 40 dtex et une longueur entre 50 et 60 mm.

A titre de fibres destinées à constituer la matrice, interviennent avantageusement des fibres synthétiques telles des fibres de polyéthylène, polypropylène, polyester, polyamide. Elles ont généralement des longueurs voisines de 90 mm et un titre compris entre 6 et 50 dtex. Des fibres de polypropylène de 17 dtex conviennent particulièrement à la réalisation de tels pré-imprégnés secs.

On associe avantageusement pour une telle réalisation des fibres de jute (ou de lin) et des fibres de polypropylène.

En fait, on élabore lesdits pré-imprégnés secs en réalisant dans un premier temps un mélange aussi homogène que possible de ces deux types de fibres (au cours dudit mélange, lesdites fibres sont éventuellement coupées). Un tel mélange contient généralement entre 30 et 70 % en poids de chacun desdits deux types de fibres. Dans un second temps, à partir dudit mélange, on prépare par des techniques classiques des étoffes. Pour obtenir des nontissés, on procède par cardage-nappage et aiguilletage. Pour obtenir des tissus ou tricots, on procède par filature, tissage multicouche ou tricotage. Dans un troisième temps, on confère la cohérence auxdits nontissés ou étoffes. A cette fin, on les soumet à un chauffage/compactage (thermoformage). Le chauffage doit être suffisant pour assurer la fusion au moins partielle des fibres synthétiques. Il ne doit pas entraîner la dégradation des fibres de renfort. Le compactage est mis en oeuvre pour l'obtention d'un matériau plus ou moins dense, plus ou moins rigide.

Les parois des panneaux de l'invention sont donc avantageusement à base de pré-imprégnés secs dont la structure et le procédé d'obtention viennent d'être rappelés ci-dessus. Lesdits pré-imprégnés secs présentent généralement une densité comprise entre 0,3 et 0,5. Ils peuvent toutefois présenter une densité supérieure à 1.

Les matériaux composites, avantageusement obtenus à partir de pré-imprégnés secs, utilisés pour constituer les parois des panneaux de l'invention ne sont pas forcément identiques. En effet, les deux parois peuvent être constituées du même matériau composite recyclable, de même module d'Young ou non, voire de deux matériaux composites recyclables différents, de même module d'Young (de modules d'Young voisins) ou non.

Ainsi, selon deux variantes de l'invention, non exclusives, peut-il intervenir dans la structure des panneaux de l'invention, deux parois en un matériau identique (même matériau, même module d'Young) ou deux parois en un matériau similaire (même matériau, modules d'Young différents).

On peut d'ores et déjà noter qu'il est particulièrement intéressant, dans la structure des panneaux de l'invention, d'avoir une paroi inférieure plus rigide que la paroi supérieure. Ces notions de parois inférieure ou supérieure se définissent à l'usage. On qualifie de paroi supérieure, la paroi du panneau destinée à supporter les charges.

Selon l'invention, on a donc trouvé, de manière surprenante, qu'il est notamment possible, à partir de pré-imprégnés secs (matériau 100 % fibreux), d'élaborer -par une mise en forme judicieuse de ceux-ci- des panneaux substantiellement rigides, capables de répondre notamment aux cahiers des charges imposés par les constructeurs automobiles pour les tablettes arrières autoporteuses. On précise ici, à toutes fins utiles, que de telles tablettes présentent généralement les dimensions approximatives suivantes : 100 cm x 50 cm.

L'intervention de tels pré-imprégnés secs est particulièrement avantageuse du point de vue de la recyclabilité. En effet, avec ce type de matériau, on peut même parler de recyclage "à deux entrées".

Les fibres choisies comme renfort et comme matrice peuvent être des produits recyclés (1ère entrée).

Les produits finis (panneaux) sont eux-même recyclables sous différentes versions (2ème entrée) :
- on peut les broyer et générer des granulés, utilisables à titre de charges dans la fabrication de pièces thermoplastiques par injection ;
- on peut séparer, par fusion différentielle, la matrice du renfort et réutiliser ladite matrice comme charge inerte chimiquement (sous forme de fibres ou de granules) dans les ouvrages en béton ;
- on peut mettre en oeuvre une incinération complète du composite avec, avantageusement, récupération d'énergie thermique.

On notera incidemment ici qu'à ce jour, de tels pré-imprégnés secs (matériaux 100 % fibreux) constituent la matière première préférée pour la réalisation des panneaux de l'invention.

En tout état de cause, les panneaux de l'invention se caractérisent par la combinaison judicieuse de leur structure et du (des) matériau(x) entrant dans celle-ci.

On décrit plus en détail ci-après la structure, la géométrie de deux variantes de réalisation de l'invention.

Selon l'une desdites variantes, le panneau de l'invention consiste en lesdites deux parois, directement solidarisées l'une à l'autre. Il n'intervient pas de produit tiers dans la structure d'un tel panneau. Selon cette variante, au moins l'une desdites deux parois présente des reliefs ou nervures. La solidarisation entre lesdites deux parois est réalisée au niveau des sommets de ces nervures. On comprend aisément qu'une telle construction génère les vides énoncés plus haut.

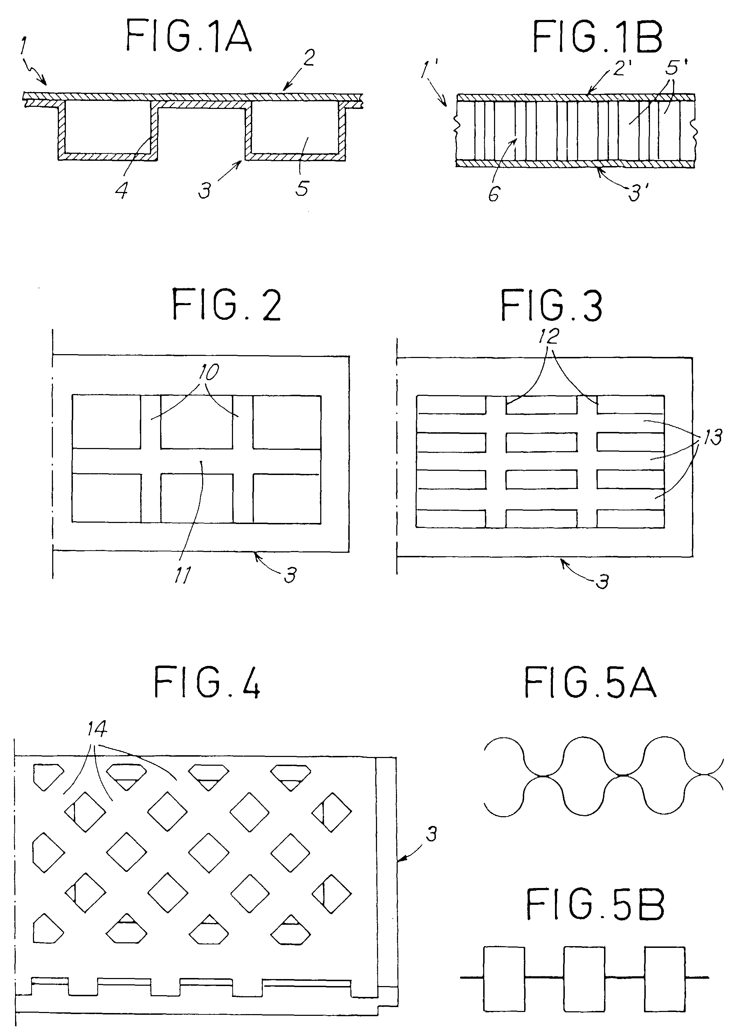

Si les deux parois présentent de tels reliefs, la structure des panneaux de l'invention peut être de l'un des types ci-après :
- structure, telle que schématisée sur la figure 5A ci-après, dans laquelle les parois supérieure et inférieure présentent des ondulations;
- structure, telle que schématisée sur la figure 5B ci-après, dans laquelle les parois supérieure et inférieure présentent des saillies à arêtes vives.

Avantageusement, l'une des parois est sensiblement plane et l'autre présente des nervures. La configuration préférée est en fait la suivante : une paroi supérieure sensiblement plane, une paroi inférieure avec nervures. Une telle configuration est schématisée sur la figure 1A ci-après.

Les nervures peuvent présenter différentes formes. Elles peuvent être arrondies (telles des ondulations) ou présenter des arêtes vives. Dans l'hypothèse de nervures à arêtes vives, on peut également travailler leur profil, en vue de renforcer leur effet (conférer de la rigidité à l'ensemble).

Pour le résultat attendu, on trouve généralement de telles nervures dans les deux directions des parois : transversale et longitudinale (dans l'hypothèse d'une paroi sensiblement rectangulaire). Plus généralement, on observe un réseau de nervures sur au moins l'une des parois de tels panneaux de l'invention. Au sein de ce réseau, lesdites nervures se coupent à angles droits ou non. Ainsi peut-on avoir un réseau de nervures en diagonale (croisement des nervures à 45°).

Avantageusement, les panneaux de l'invention consistent en une paroi supérieure sensiblement plane et une paroi inférieure présentant un réseau de nervures en diagonale. Selon une seconde variante de l'invention, le panneau comporte lesdites deux parois solidarisées l'une à l'autre par l'intermédiaire d'un produit tiers. Selon cette variante, lesdites deux parois, au sein de la structure du panneau, sont sensiblement parallèles et l'on trouve, disposé entre celles-ci, un insert à structure alvéolaire. Les alvéoles dudit insert constituent les vides énoncés plus haut. La solidarisation desdites deux parois est mise en oeuvre à l'aide de cet insert. La nature du matériau constitutif de celui-ci est très importante. Ledit matériau doit permettre ladite solidarisation, ne pas nuire à la recyclabilité de l'ensemble et ne pas trop alourdir celui-ci. On fait généralement intervenir un insert en un matériau thermoplastique, compatible avec le matériau constitutif des parois (i.e susceptible d'assurer, après fusion, le collage paroi/insert/paroi). On préconise l'intervention d'un insert en polypropylène basse densité.

Les deux variantes de l'invention précisées ci-dessus ne sont pas exclusives.

Comme indiqué plus haut, les panneaux de l'invention ont été mis au point dans un contexte particulier : celui de l'élaboration de pièces semi-structurelles d'habitacle ou de coffre de véhicules automobiles et plus précisément celui de l'élaboration de tablettes arrières autoporteuses.

Selon son deuxième objet, la présente invention concerne donc de telles pièces semi-structurelles qui comportent dans leur structure au moins un desdits panneaux de l'invention.

On notera toutefois qu'il ne s'agit pas là du débouché exclusif des panneaux de l'invention. Leur utilisation se révèlera sans nul doute intéressante dans d'autres contextes. On rappelle ici que lesdits panneaux associent, de façon surprenante, recyclabilité et performances mécaniques.

Selon soit troisième objet, l'invention concerne un procédé pour l'élaboration desdits panneaux. Ledit procédé est basé sur le caractère thermoplastique des éléments constituant lesdits panneaux.

Il comprend :
- la préparation des deux parois -au format, à la forme et au taux de compactage désirés -en un (des) matériau(x) composite(s) recyclable(s), comportant une matrice thermoplastique renforcée par des fibres cellulosiques;
- un traitement thermique de celles-ci ;
- leur assemblage par pressage à froid.

On notera que ledit traitement thermique peut faire partie intégrante de l'étape de préparation des deux parois.

On décrit maintenant plus en détail des variantes de ce procédé et notamment une de ses variantes, qui permet de préparer les panneaux à deux parois, dont l'une au moins présente des nervures et une autre de ses variantes, qui permet de préparer les panneaux à deux parois sensiblement parallèles espacées par un insert.

Pour la première de ces variantes, on procède en trois étapes :
a) on forme à froid, en appliquant la pression adéquate, le matériau de départ pour obtenir les parois supérieure et inférieure ; l'une au moins desdites parois présentant des nervures ;
b) on active les faces destinées à être mises en contact en les soumettant à un rayonnement infra-rouge ;
c) on assemble les parois par pressage à froid desdites surfaces activées.

Le matériau de départ se présente avantageusement en rouleau. Selon la variante préférée de l'invention, il s'agit d'un rouleau 100 % fibreux ; généralement d'un rouleau d'un nontissé 100 % fibreux (pré-imprégné sec). Celui-ci, avant d'être soumis à l'étape a) ci-dessus est chauffé et pré-compacté.

Pour la seconde de ces variantes, on procède également en trois étapes :
- on chauffe, en le compactant, le matériau de départ pour obtenir les parois supérieure et inférieure, sensiblement planes ;
- on dispose entre lesdites parois chaudes l'insert de structure alvéolaire (froid) ;
- on solidarise l'ensemble (structure sandwich) par pressage à froid.

On utilise avantageusement le matériau de départ rappelé ci-dessus.

Les techniques mises en oeuvre sont classiques. Il s'agit de mettre en forme et de "souder" des pièces en des matériaux thermoplastiques renforcés.

Les figures annexées illustrent la présente invention.

Les figures 1A et 1B sont des coupes verticales schématiques des deux variantes de réalisation préférées des panneaux de l'invention.

Les figures 2 à 4 sont des vues de dessous (ou de dessus) partielles de trois variantes de réalisation de la paroi (ou demi-coque) inférieure d'un panneau de l'invention du type de celui schématisé sur la figure 1A.

Les figures 5A et 5B sont des coupes verticales schématiques de deux variantes de réalisation de panneaux de l'invention.

Le panneau 1 schématisé sur la figure 1A comporte, de façon caractéristique, deux parois ou demi-coques 2, 3. La paroi supérieure 2 est sensiblement plane tandis que la paroi inférieure 3 est nervurée. Lesdites parois supérieure 2 et inférieure 3 sont solidarisées directement l'une à l'autre au niveau des sommets des nervures 4. Le matériau constitutif desdites parois 2 et 3 a permis cette solidarisation directe (réalisée par pressage à froid des faces convenables desdites parois, préalablement activées par rayonnement infra-rouge).

Le panneau 1' schématisé sur la figure 1B comporte, de façon caractéristique, deux parois ou peaux 2', 3'. Ces deux parois 2' et 3' sont sensiblement planes et parallèles. On a disposé entre celles-ci un insert 6 à structure alvéolaire. On a représenté en 5' les vides ménagés dans la structure dudit insert 6, entre lesdites parois supérieure 2' et inférieure 3'. Lesdites parois sont solidarisées entre elles grâce audit insert 6. Les matériaux constitutifs desdites parois 2' et 3' et dudit insert 6 doivent permettre cette solidarisation (réalisée par pressage à froid des éléments en contact ; les faces convenables de chacune desdites parois 2' et 3' ayant été préalablement chauffées).

Sur la figure 2, on a représenté la moitié d'une demi-coque inférieure 3 présentant une nervure longitudinale 11 et deux nervures transversales 10.

Sur la figure 3, on a représenté de la même façon, la moitié d'une autre demi-coque inférieure 3 présentant trois nervures longitudinales 13 et deux nervures transversales 12.

Sur la figure 4 enfin, on a représenté de la même façon la moitié d'une autre demi-coque inférieure 3 présentant des nervures en diagonale (angle de 45°).

Ces demi-coques peuvent être solidarisées à une demi-coque, sensiblement plane pour constituer un panneau du type de celui schématisé sur la figure 1. Les espaces en creux entre les nervures génèreront les vides 5. On aura de la même façon des vides au niveau des pourtours du panneau. On ferme avantageusement lesdits vides sur tout le pourtour en incurvant les bords desdites demi-coques supérieure et inférieure.

On propose maintenant un exemple.

On utilise comme matériau de départ un nontissé pré-imprégné sec renfermant 50 % en poids de fibres de jute de 10-40 dtex et 50 % en poids de fibres de polypropylène de 17 dtex. On utilise plus précisément deux formats dudit nontissé (dimensions : 120 cm x 70 cm).

Ceux-ci sont préalablement chauffés aux environs de 190° C à l'intérieur d'une presse à plateaux sous une pression d'environ 10 bars.

Ils sont ensuite formés à froid avec application d'une pression de 40 bars. On obtient d'une part une paroi sensiblement plane (destinée à constituer la demi-coque supérieure du panneau) et d'autre part une paroi nervurée (destinée à constituer la demi-coque inférieure du panneau). Les nervures à arêtes vives sont disposées en diagonale dans la partie centrale de la paroi. Elles ont une hauteur de 12,5 mm.

L'épaisseur des parois est de 2 mm. Le module d'Young du matériau les constituant est de 1800 MPa.

On a alors soumis à un rayonnement infra-rouge les faces internes de chacune desdites demi-coques (pour porter leur température à environ 180°C) et on les a ensuite assemblées par pressage à froid (sous environ 10 bars).

On a ainsi obtenu un panneau de l'invention. Ses propriétés mécaniques ont été testées. On a plus précisément évalué sa rigidité en flexion et en torsion.

### Test de rigidité en flexion :

Le panneau est posé sur deux appuis transversaux disposés au voisinage (à environ 1 cm) de ses extrémités. Une charge de 15 kg est alors appliquée, pendant 5 min, au milieu dudit panneau (au milieu desdits appuis).

On mesure une flèche de seulement 8,4 mm.

On re-mesure la flèche, après une relaxation de 5 min du panneau (sans charge). La flèche ainsi mesurée, dite flèche résiduelle, est alors de 0,7 mm.

### Test de rigidité en torsion :

Le panneau est bridé sur trois appuis, disposés dans trois de ses coins. Sur le quatrième coin, resté libre, on applique une charge de 1 kg. On mesure alors, au niveau dudit coin, une flèche en torsion de 12 mm, seulement.

Un tel panneau répond au cahier des charges fixés par les constructeurs automobiles pour les tablettes arrières autoporteuses (cahier des charges qui, généralement, fixe une flèche en flexion inférieure ou égale à 9 mm et une flèche en torsion inférieure ou égale à 40 mm).

Il peut donc être utilisé à cette fin.

On prévoit alors son habillage avec un matériau adéquat.

## Revendications

1. Panneau (1;1') substantiellement rigide, dont la structure, exempte d'armature, comporte deux parois (2,3 ; 2',3') de faible épaisseur en un (des) matériau(x) composite(s) recyclable(s), solidarisées l'une à l'autre et entre lesquelles sont ménagés des vides (5;5'); chacune desdites parois présentant un module d'Young compris entre 500 et 4000 MPa et le(s)dit(s) matériau(x) composite(s) comportant une matrice thermoplastique renforcée par des fibres cellulosiques.

2. Panneau (1;1') selon la revendication 1, caractérisé en ce que ledit matériau composite est obtenu à partir d'un matériau 100 % fibreux qui consiste avantageusement en un nontissé .

3. Panneau (1;1') selon l'une des revendications 1 ou 2, caractérisé en ce que ledit matériau composite est obtenu à partir d'une part de fibres cellulosiques et d'autre part de fibres synthétiques.

4. Panneau (1;1') selon l'une quelconque des revendications 1 à 3, caractérisé en ce que lesdites deux parois (2,3 ; 2',3') sont en le même matériau composite, de même module d'Young ou non.

5. Panneau (1;1') selon l'une quelconque des revendications 1 à 3, caractérisé en ce que lesdites deux parois (2,3 ; 2',3') sont en des matériaux composites différents.

6. Panneau (1) selon l'une quelconque des revendications 1 à 5, caractérisé en ce que sa structure consiste en lesdites deux parois (2,3), l'une (3) au moins d'entre elles présentant des reliefs ou nervures (4); lesdites deux parois (2,3) étant solidarisées directement l'une à l'autre au niveau des sommets de ces reliefs ou nervures(4).

7. Panneau (1) selon la revendication 6, caractérisé en ce que sa structure consiste en une paroi supérieure (2) sensiblement plane et une paroi inférieure (3) nervurée; ladite paroi supérieure (2) étant destinée à supporter les charges.

8. Panneau (1) selon la revendication 7, caractérisé en ce que ladite paroi inférieure (3) présente des nervures (4) en diagonale.

9. Panneau (1') selon l'une quelconque des revendications 1 à 5, caractérisé en ce que sa structure comporte lesdites deux parois (2', 3'), sensiblement parallèles, et, disposé entre celles-ci, un insert (6) à structure alvéolaire en un matériau thermoplastique.

10. Pièces semi-structurelles d'habitacle ou de coffre de véhicules automobiles et notamment tablettes arrières autoporteuses, comportant dans leur structure, au moins un panneau (1;1') selon l'une quelconque des revendications précédentes.

11. Procédé pour l'élaboration d'un panneau selon l'une quelconque des revendications 1 à 9, caractérisé en ce qu'il comprend :
- la préparation des deux parois (2,3 ; 2',3') -au format, à la forme et au taux de compactage désirés- en un (des) matériau(x) composite(s) recyclable(s) comportant une matrice thermoplastique renforcée par des fibres cellulosiques;
- un traitement thermique de celles-ci ;
- leur assemblage par pressage à froid.

## Patentansprüche

1. Im wesentlichen steife Platte bzw. Paneel (1;1'), deren (dessen) Struktur, die frei von einer Armierung ist, zwei Wände (2,3; 2',3') mit einer geringen Dicke aus einem oder mehreren recyclisierbaren Verbundwerkstoffen aufweist, die miteinander verbunden sind und zwischen denen Hohlräume (5;5') angeordnet sind; wobei jede der genannten Wände einen Young'schen Modul zwischen 500 und 4000 MPa aufweist und der(die) Verbundwerkstoff(e) eine mit Cellulosefasern verstärkte thermoplastische Matrix aufweist.

2. Platte (1;1') nach Anspruch 1, dadurch gekennzeichnet, dass der genannte Verbundwerkstoff hergestellt ist aus 100 % Faser-Material, das zweckmäßig aus einer Fasermatte (Vlies) besteht.

3. Platte (1;1') nach einem der Ansprüche 1 oder 2, dadurch gekennzeichnet, dass der genannte Verbundwerkstoff hergestellt ist einerseits aus Cellulosefasern und andererseits aus Synthesefasern.

4. Platte (1;1') nach einem der Ansprüche 1 bis 3, dadurch gekennzeichnet, dass die genannten beiden Wände (2,3; 2',3') aus dem gleichen Verbundwerkstoff mit dem gleichen Young'sche Modul hergestellt sind oder nicht.

5. Platte (1;1') nach einem der Ansprüche 1 bis 3, dadurch gekennzeichnet, dass die genannten beiden Wände (2,3; 2',3') aus unterschiedlichen Verbundwerkstoffen hergestellt sind.

6. Platte (1) nach einem der Ansprüche 1 bis 5, dadurch gekennzeichnet, dass ihre Struktur aus den genannten beiden Wänden (2,3) besteht, wobei mindestens eine von ihnen (3) erhabene Elemente oder Rippen (4) aufweist; und die genannten beiden Wände (2,3) im Bereich der Scheitel dieser erhabenen Elemente oder Rippen (4) direkt miteinander verbunden sind.

7. Platte (1) nach Anspruch 6, dadurch gekennzeichnet, dass ihre Struktur aus einer im wesentlichen ebenen oberen Wand (2) und einer gerippten unteren Wand (3) besteht, wobei die genannte obere Wand (2) dazu bestimmt ist, die Belastungen aufzunehmen.

8. Platte (1) nach Anspruch 7, dadurch gekennzeichnet, dass die genannte untere Wand (3) diagonal angeordnete Rippen (4) aufweist.

9. Platte (1') nach einem der Ansprüche 1 bis 5, dadurch gekennzeichnet, dass ihre Struktur die genannten, im wesentlichen zueinander parallelen beiden Wände (2, 3') aufweist, und dass zwischen diesen ein Einsatz (6) mit einer wabenförmigen Struktur aus einem thermoplastischen Material angeordnet ist.

10. Semistrukturelle Karosserie- oder Kofferraumteile von Automobilen und insbesondere selbsttragende Rückwände, die in ihrer Struktur mindestens eine Platte (1;1') nach einem der vorhergehenden Ansprüche umfassen.

11. Verfahren zur Verarbeitung einer Platte nach einem der Ansprüche 1 bis 9, dadurch gekennzeichnet, dass es umfasst:
- die Herstellung von zwei Wänden (2,3; 2',3') in dem gewünschten Format, mit der gewünschten Form und mit dem gewünschten Grad der Verdichtung - aus einem oder mehreren recyclisierbaren Verbundwerkstoffen, die eine durch Cellulosefasern verstärkte thermoplastische Matrix aufweisen;
- das thermische Behandeln derselben; und
- ihr Zusammenfügen durch Kaltpressen.

## Claims

1. Substantially rigid panel (1; 1') whose non-reinforced structure comprises two thin walls (2,3; 2',3') made of one or more recyclable composite materials, said walls being joined together and having spaces (5; 5') between them, each of said walls having a Young's modulus of between 500 and 4000 MPa and said composite material(s) comprising a thermoplastic matrix reinforced with cellulosic fibres.

2. Panel (1; 1') according to claim 1, characterized in that said composite material is obtained from a 100% fibrous material which advantageously consists of a non-woven.

3. Panel (1; 1') according to claim 1 or claim 2, characterized in that said composite material is obtained from both cellulosic fibres and synthetic fibres.

4. Panel (1; 1') according to any one of claims 1 to 3, characterized in that said two walls (2,3; 2',3') are made of the same composite material and have the same or different Young's moduli.

5. Panel (1; 1') according to any one of claims 1 to 3, characterized in that said two walls (2;3 ; 2',3') are made of different composite materials.

6. Panel (1) according to any one of claims 1 to 5, characterized in that its structure consists of said two walls (2,3), at least one of which (3) has reliefs or ribs (4), said two walls (2;3) being directly joined together at the vertices of these reliefs or ribs (4).

7. Panel (1) according to claim 6, characterized in that its structure consists of a substantially flat top wall (2) and a ribbed bottom wall (3), said top wall (2) being intended for bearing loads.

8. Panel (1) according to claim 7, characterized in that said bottom wall (3) has diagonal ribs (4).

9. Panel (1') according to any one of claims 1 to 5, characterized in that its structure comprises said two walls (2',3'), which are substantially parallel and between which there is an insert (6) of alveolate structure made of a thermoplastic material.

10. Semi-structural parts of automotive vehicle passenger compartments or boots and especially self-supporting rear shelves, comprising in their structure at least one panel (1; 1') according to any one of the preceding claims.

11. Process for the production of a panel according to any one of claims 1 to 9,
characterized in that it comprises:
- preparing the two walls (2,3; 2',3') - with the desired size, shape and compaction ratio - from one or more recyclable composite materials comprising a thermoplastic matrix reinforced with cellulosic fibres;
- heat-treating them; and
- assembling them by cold pressing.
